# EUROPEAN PATENT APPLICATION

(11) **EP 4 664 616 A1**
(43) Date of publication of application: **17.12.2025**
(21) Application number: 25170936.6
(22) Date of filing: 16.04.2025
(51) Int. Cl.: H01M 50/103, H01M 50/119

(54) **POWER STORAGE DEVICE**

(30) Priority: 10.06.2024 JP 2024093475
(71) Applicant: Prime Planet Energy & Solutions, Inc., Chuo-ku, Tokyo 103-0022 (JP)
(72) Inventor: NAKATA, Naofumi, Tokyo, 103-0022 (JP)
(74) Representative: Kuhnen & Wacker Patent- und Rechtsanwaltsbüro PartG mbB

(57) **Abstract**

A power storage device (100) comprising: a rectangular case body (12) having openings (12h1, 12h2) at both ends in a length direction (Y) of the case body (12), an electrode body (20) housed in the case body (12), a first lid (14a) attached to the opening (12h1) at one end of the case body (12) in the length direction (Y), and a second lid (14b) attached to the opening (12h2) at another end of the case body (12) in the length direction (Y), wherein the case body (12) includes a pair of opposed wide width surfaces (12b), and a pair of opposed narrow width surfaces (12a) continuous with the pair of wide width surfaces (12b), and wherein a plurality of projections (60) along the length direction (Y) of the case body (12) are located on an inner side of at least a surface of the narrow width surfaces (12a) and the wide width surfaces (12b) of the case body (12).

## Description

### BACKGROUND

The present disclosure relates to a power storage device.

Japanese Patent Application Publication No. 2001-57179, for example, discloses a secondary battery including an electrode layered structure and a battery case. The battery case includes a battery can that houses the electrode layered structure, and a battery lid that seals a maximum opening of the battery can. The outer surface of the battery can have an X-shaped groove. Accordingly, even when the electrode layered structure expands, the X-shaped groove reduces deformation of the battery can.

Japanese Patent Publication No. 2018-29006, for example, discloses a power storage device including an electrode assembly, a bottomed cylindrical case body that houses the electrode assembly, and a lid that closes an opening of the case body. The case body has a pair of long side walls. The case body includes an insulating layer covering inner surfaces of the long side walls. The insulating layer is provided with a rib of an amorphous carbon film extending in the depth direction of the case body. This makes it less likely for bottom corners of the electrode assembly to get caught on the insulating layer when the electrode assembly is inserted in the case in the depth direction into the case body with the insulating layer.

### SUMMARY

For such a power storage device in which an electrode body is inserted along the length of a rectangular cylindrical case body having openings at both ends, enhancement of productivity is required.

A power storage device disclosed here includes: a rectangular cylindrical case body having openings at both ends in a length direction of the case body; an electrode body housed in the case body; a first lid attached to the opening at one end of the case body in the length direction; and a second lid attached to the opening at another end of the case body in the length direction. The case body includes a pair of opposed wide width surfaces and a pair of opposed narrow width surfaces continuous with the pair of wide width surfaces. A plurality of projections along the length direction of the case body are located on an inner side of at least a surface of the narrow width surfaces and the wide width surfaces of the case body.

In the power storage device disclosed here, in inserting the electrode body into the case body, the electrode body is brought into contact with the projection and is not in contact with the inner surface of the case body except for the projection. Thus, in inserting the electrode body into the case body, the contact area between the inner surface of the case body and the electrode body can be reduced. This eases insertion of the electrode body into the case body, and as a result, productivity of the power storage device can be suitably enhanced.

### BRIEF DESCRIPTION OF THE DRAWINGS

FIG. 1 is a perspective view of a battery according to a preferred embodiment.
FIG. 2 is a perspective view illustrating the battery in FIG. 1 turned upside down.
FIG. 3 is a view illustrating an internal configuration of the battery in FIG. 1.
FIG. 4 is a perspective view illustrating an electrode body attached to a first lid and a second lid.
FIG. 5 is a perspective view illustrating a state where the electrode body is inserted into a case body.
FIG. 6 is a perspective view of the case body.
FIG. 7 is a view illustrating a narrow width surface.
FIG. 8 is a view illustrating a wide width surface.
FIG. 9 is a view of the narrow width surface in FIG. 7 as seen from the left.
FIG. 10 is a view of the wide width surface in FIG. 8 as seen from the left.
FIG. 11 is a view illustrating a height of a projection extending in a Y direction.
FIG. 12 is a view illustrating a wide width surface according to a variation.
FIG. 13 is a view illustrating a wide width surface according to a variation.
FIG. 14 is a view illustrating a height of a projection according to a variation.
FIG. 15 is a view illustrating a height of a projection according to a variation.
FIG. 16 is a view illustrating a height of a projection according to a variation.
FIG. 17 is a view illustrating a height of a projection according to a variation.
FIG. 18 is a view illustrating a width of a projection according to a variation.
FIG. 19 is a view illustrating a width of a projection according to a variation.
FIG. 20 is a view illustrating a width of a projection according to a variation.
FIG. 21 is a view illustrating a width of a projection according to a variation.

### DETAILED DESCRIPTION

A preferred embodiment of the technique disclosed here will be described hereinafter with reference to the drawings. The preferred embodiment described here is, of course, not intended to particularly limit the present disclosure. Each drawing is a schematic view and does not necessarily strictly reflect actual products. Members and parts having the same functions are denoted by the same reference numerals as appropriate, and description for the same members and parts will not be repeated as appropriate.

A "power storage device" herein refers to a device capable of being charged and discharged. Power storage devices include devices capable of being repeatedly charged and discharged. The power storage devices include batteries such as a primary battery and a secondary battery (e.g., a nonaqueous electrolyte secondary battery such as a lithium ion secondary battery, and a nickel hydrogen battery), and capacitors (physical cells) such as an electric double layer capacitor. An electrolyte may be any of a liquid electrolyte (electrolytic solution), a gelled electrolyte, and a solid electrolyte. As a power storage device disclosed here, a lithium ion secondary battery (hereinafter referred to simply as a "battery 100") will be described as an example.

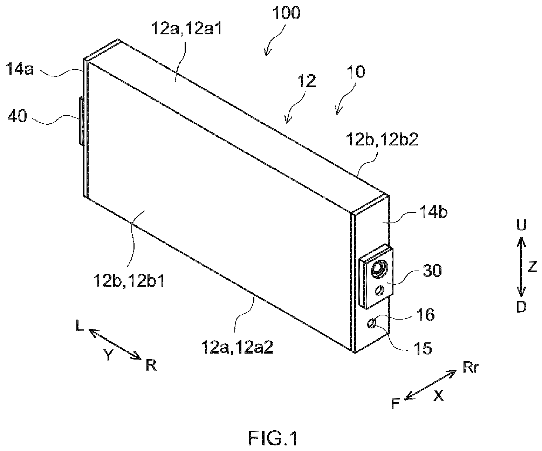

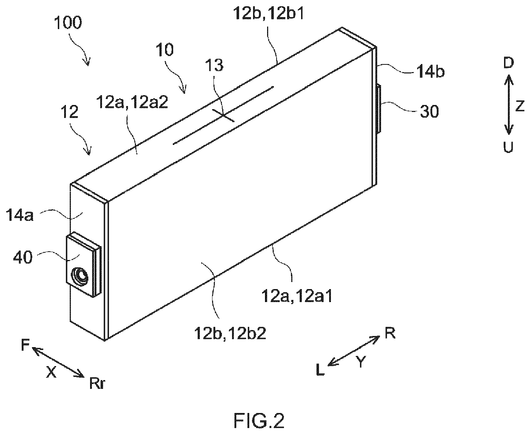

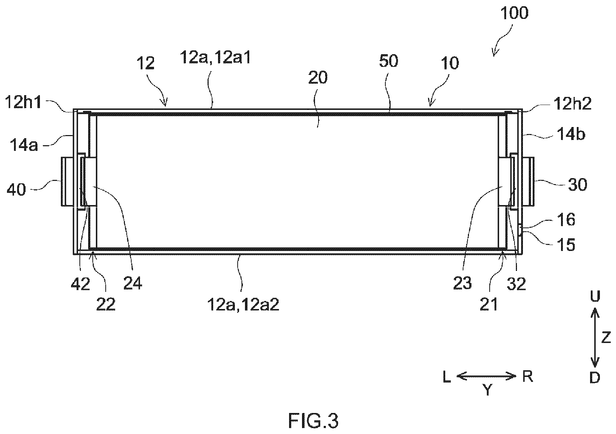

FIG. 1 is a perspective view of the battery 100 according to this preferred embodiment. FIG. 2 is a perspective view of the battery 100 in FIG. 1 turned upside down. FIG. 3 is a view illustrating an internal configuration of the battery 100 in FIG. 1. Characters F, Rr, L, R, U, and D in the drawings herein respectively represent the front, rear, left, right, up, and down of battery 100. Furthermore, characters X, Y, and Z in the drawings represent the short-side direction, long-side direction, and upward and downward direction of the battery 100. The X direction herein is the front-rear direction. The Y direction is the left-right direction and is orthogonal to the X direction. The Y direction is an example of the length direction. The Z direction is orthogonal to the X direction and the Y direction. It should be noted that these directions are defined for convenience of description and do not limit the state of installation of the battery 100.

As illustrated in FIG. 3, the battery 100 includes a battery case 10, an electrode body 20, a positive electrode terminal 30, a negative electrode terminal 40, and an electrolyte (not shown). As mentioned above, the battery 100 here is a lithium ion secondary battery.

The battery case 10 houses the electrode body 20 and the electrolyte. The battery case 10 has a box shape. As illustrated in FIG. 1, the battery case 10 has a flat and rectangular parallelepiped (e.g., square) outer shape. A material for the battery case 10 is not particularly limited. The battery case 10 is made of a metal, and is preferably made of aluminum, an aluminum alloy, iron, or an iron alloy, for example.

In this preferred embodiment, as illustrated in FIG. 3, the battery case 10 includes a case body 12, a first lid 14a, and a second lid 14b. The case body 12 is a rectangular cylindrical case having openings at both ends in the Y direction open. The case body 12 extends in the Y direction. In this preferred embodiment, an opening 12h1 is formed in one end (left end in this example) of the case body 12 in the Y direction. An opening 12h2 is formed in the other end (right end in this example) of the case body 12 in the Y direction.

As illustrated in FIG. 1, the case body 12 includes a pair of narrow width surfaces 12a and a pair of wide width surfaces 12b. The narrow width surfaces 12a are substantially rectangular. The pair of narrow width surfaces 12a face each other in the Z direction and constitute the upper and lower surfaces of the case body 12. The narrow width surfaces 12a extend in the X direction and the Y direction. In this preferred embodiment, one of the narrow width surfaces 12a on one side in the Z direction (upper side in this example) will also be referred to as a first narrow width surface 12a1. The narrow width surface 12a on the other side in the Z direction (lower side in this example) will also be referred to as a second narrow width surface 12a2.

The wide width surfaces 12b are substantially rectangular. The pair of wide width surfaces 12b are located between the pair of narrow width surfaces 12a and continuous with the pair of narrow width surfaces 12a. In this preferred embodiment, the longer sides of the pair of wide width surfaces 12b are connected to the longer sides of the pair of narrow width surfaces 12a. The pair of wide width surfaces 12b face each other in the X direction and constitute the front and rear surfaces of the case body 12. The wide width surfaces 12b extend in the Y direction and the Z direction. In this preferred embodiment, one of the wide width surfaces 12b on one side in the X direction (front side in this example) will also be referred to as a first wide width surface 12b1. The wide width surface 12b on the other side in the X direction (rear side in this example) will also be referred to as a second wide width surface 12b2.

In this preferred embodiment, the area of each wide width surface 12b is larger than the area of each narrow width surface 12a. The length of each wide width surface 12b in the Z direction is longer than the length of each narrow width surface 12a in the X direction. The case body 12 is formed by, for example, bending a single metal plate into a cylindrical shape and joining the seams together (e.g., by welding).

In this preferred embodiment, as illustrated in FIG. 2, the second narrow width surface 12a2 has a gas release valve 13. The gas release valve 13 is configured to break when the pressure in the battery case 10 exceeds a predetermined value, and release a gas inside the battery case 10 to the outside. In this preferred embodiment, the number of gas release valves 13 is one, but may be two or more. The gas release valve 13 may be provided on the first narrow width surface 12a1. In addition, the position at which the gas release valve 13 is located is not limited to the narrow width surfaces 12a. The gas release valve 13 may be located on a surface other than the narrow width surfaces 12a, such as the wide width surfaces 12b, the first lid 14a, or the second lid 14b. The area of the gas release valve 13 may be arbitrarily selected. In this preferred embodiment, the gas release valve 13 is in the shape of a cross cutout. However, the shape of the gas release valve 13 is not particularly limited. The gas release valve 13 may have, for example, a linear cutout shape (with only vertical or horizontal lines), or may have a known elliptical valve shape (with a cutout inside) or a known circular valve shape (with a cutout inside). Furthermore, the dimensions (length and depth) of the cutout are arbitrary, and can be determined as appropriate in consideration of factors such as the pressure proof of the battery case 10.

The first lid 14a and the second lid 14b are attached to the case body 12. As illustrated in FIG. 3, the first lid 14a is attached to the opening 12h1 at one end of the case body 12 in the Y direction. The first lid 14a seals the opening 12h1. The second lid 14b is attached to the opening 12h2 at the other end of the case body 12 in the Y direction. The second lid 14b seals the opening 12h2. The first lid 14a and the second lid 14b have shapes corresponding to the openings 12h1 and 12h2, respectively, in other words, shapes that match the openings 12h1 and 12h2, respectively. In this preferred embodiment, the first lid 14a and the second lid 14b are substantially rectangular plate members. In this preferred embodiment, the area of each of the first lid 14a and the second lid 14b is smaller than the area of each wide width surface 12b, and smaller than the area of each narrow width surface 12a. The battery case 10 is united with the peripheries of the pair of openings 12h1 and 12h2 of the case body 12 by joining (e.g., welding) the first lid 14a and the second lid 14b to the peripheries. Accordingly, the battery case 10 is hermetically sealed (made airtight).

In this preferred embodiment, as illustrated in FIG. 1, the second lid 14b has an injection hole 15. The injection hole 15 may be located in the first lid 14a. The injection hole 15 may be located in the case body 12. In this preferred embodiment, the injection hole 15 is located in a different surface from the gas release valve 13, but may also be located in the same surface as the gas release valve 13. The injection hole 15 is a hole for injecting an electrolyte into the inside of the battery case 10 after the first lid 14a and the second lid 14b are assembled to the case body 12. The injection hole 15 is sealed by a sealing member 16 after injection of the electrolyte. In this preferred embodiment, although the injection hole 15 is located in the second lid 14b, the injection hole 15 may be located in the first lid 14a. The injection hole 15 may be located in the case body 12. In this preferred embodiment, the injection hole 15 is located in a different surface from the gas release valve 13, but may be located in the same surface as the gas release valve 13.

As illustrated in FIG. 1, the positive electrode terminal 30 and the negative electrode terminal 40 are fixed to the battery case 10. In this preferred embodiment, the positive electrode terminal 30 and the negative electrode terminal 40 are located on opposite surfaces of the battery case 10. In this preferred embodiment, the positive electrode terminal 30 is attached to the second lid 14b that is located on the other side in the Y direction (right side in this example). As illustrated in FIG. 2, the negative electrode terminal 40 is attached to the first lid 14a that is located on the one side in the Y direction (left side in this example) . The positive electrode terminal 30 and the negative electrode terminal 40 may be located on the case body 12. In this preferred embodiment, the positive electrode terminal 30 and the negative electrode terminal 40 are located on a different surface of the battery case 10 from the gas discharge valve 13, but may also be located on the same surface of the battery case 10 as the gas discharge valve 13. The positive electrode terminal 30 and the negative electrode terminal 40 may be located on the same surface of the battery case 10.

As illustrated in FIG. 3, the positive electrode terminal 30 and the negative electrode terminal 40 are exposed on the outside of the battery case 10. Specifically, the positive electrode terminal 30 and the negative electrode terminal 40 are exposed to the outside of the first lid 14a and the second lid 14b. In this preferred embodiment, the positive electrode terminal 30 and the negative electrode terminal 40 extend in the Z direction and are arranged on the axis passing through the center of the first lid 14a (or the second lid 14b). The axis on which the positive electrode terminal 30 and the negative electrode terminal 40 are located may be shifted in the X direction or in the Z direction, for example, from the center of the first lid 14a and the second lid 14b. Furthermore, the positive electrode terminal 30 and the negative electrode terminal 40 do not need to be located on the same axis. For example, one of the positive electrode terminals 30 and the negative electrode terminals 40 may be shifted to one side in the X direction with the other shifted to the other side in the X direction.

The positive electrode terminal 30 is preferably made of a metal, and preferably made of aluminum or an aluminum alloy, for example. The electrode terminal 40 is preferably made of a metal, more preferably made of copper or a copper alloy, for example.

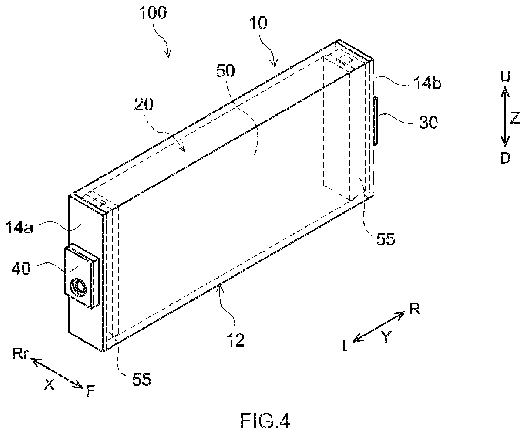

As illustrated in FIG. 3, the positive electrode terminal 30 is electrically connected to a positive electrode 21 of the electrode body 20 through a positive electrode collector 32 inside the battery case 10. The negative electrode terminal 40 is electrically connected to a negative electrode 22 of the electrode body 20 through a negative electrode current collector 42 inside the battery case 10. The positive electrode terminal 30 and the negative electrode terminal 40 are insulated from the case body 12 by an insulating film 50. The positive electrode terminal 30 and the negative electrode terminal 40 are insulated by an insulating member 55 (see FIG. 4) from the first lid 14a and the second lid 14b.

As illustrated in FIG. 3, the electrode body 20 is housed inside the battery case 10 (i.e., the case body 12). FIG. 4 is a perspective view illustrating the electrode body 20 attached to the first lid 14a and the second lid 14b. As illustrated in FIG. 4, the electrode body 20 is disposed inside the battery case 10 while being covered with the insulating film 50. In FIG. 4, one electrode body 20 is housed inside one battery case 10. However, the number of electrode bodies 20 housed in one battery case 10 is not particularly limited, and may be a plural number.

As illustrated in FIG. 3, the electrode body 20 includes the positive electrode 21 and the negative electrode 22. In this preferred embodiment, the electrode body 20 is a so-called wound electrode body. The electrode body 20 is formed by winding a layered structure in which the strip-shaped positive electrode 21 and the strip-shaped negative electrode 22 are stacked with a strip-shaped separator (not shown) interposed therebetween, in the longitudinal direction about a winding axis. The electrode body 20 may also be a laminated electrode body formed by stacking square-shaped positive and square-shaped negative electrodes in an insulated state.

In this preferred embodiment, the electrode body 20 has a flat outer shape. Although not shown, the electrode body 20 includes a pair of curved portions and a pair of flat surfaces coupling the pair of curved portions. In this preferred embodiment, the electrode body 20 is housed inside the battery case 10 with the winding axis aligned in the Y direction. The pair of curved portions of the electrode body 20 respectively face the pair of narrow width surfaces 12a of the case body 12. The electrode body 20 may be housed inside the battery case 10 with the winding axis aligned in the Z direction. Members (the positive electrode 21, the negative electrode 22, and the separator, etc.) constituting the electrode body 20 may be similar to those of a typical secondary battery and are not particularly limited.

The positive electrode 21 includes, for example, a positive electrode current collector, and a positive electrode active material layer fixed onto at least one surface of the positive electrode current collector. The positive electrode current collector has a strip shape in this preferred embodiment. The positive electrode current collector is made of a conductive metal such as aluminum, an aluminum alloy, nickel, or stainless steel, for example. The positive electrode current collector is metal foil, specifically aluminum foil in this preferred embodiment.

The positive electrode active material layer is provided in a strip shape along the longitudinal direction of the strip-shaped positive electrode current collector. The positive electrode active material layer has a positive electrode active material that can reversibly absorb and desorb charge carriers. The positive electrode active material is preferably an oxide containing at least one of Ni, Co, and Mn. Examples of the positive electrode active material include lithium transition metal composite oxides such as lithium cobaltate, lithium manganate, lithium nickelate, lithium nickel manganese composite oxide, and lithium nickel cobalt composite oxide. The positive electrode active material is, for example, a complex oxide containing Ni and Li, preferably includes a lithium nickel composite oxide in which the Ni content in the composite oxide is in the range from 70 mol% to 100 mol% with respect to the total mole number of the constituent elements excluding Li and oxygen in the composite oxide. Furthermore, examples of the positive electrode active material include materials in which some of Ni, Co, and Mn are substituted by, for example, Al, Ti, Zr, P, B, Si, Nb, and C, and materials in which the particle surface is covered with compounds containing, for example, Al, Ti, Zr, W, P, B, Si, Nb, and C. The replacement amount and the additive amount are approximately 0.1 mole% to 7 mole% in total.

The negative electrode 22 includes, for example, a negative electrode current collector and a negative electrode active material layer fixed onto at least one surface of the negative electrode current collector. The negative electrode current collector has a strip shape in this preferred embodiment. The negative electrode current collector is made of a conductive metal such as copper, a copper alloy, nickel, or stainless steel, for example. The negative electrode current collector is metal foil, specifically copper foil in this preferred embodiment.

The negative electrode active material layer is provided in a strip shape along the longitudinal direction of the strip-shaped negative electrode current collector. The negative electrode active material layer includes a negative electrode active material that can reversibly absorb and desorb charge carriers. Examples of the negative electrode active material include carbon materials such as graphite and carbon, metals that can absorb lithium, such as Si, SiO, SiC, and Sn, and compounds of such metals.

The separator is a member that insulates the positive electrode active material layer and the negative electrode active material layer from each other. The separator is preferably a porous resin sheet of a polyolefin resin such as polyethylene (PE) or polypropylene (PP). A heat resistance layer (HRL) including an inorganic filler may be provided on the surface of the separator. Examples of the inorganic filler include alumina, boehmite, aluminium hydroxide, and titania.

As illustrated in FIG. 3, the electrode body 20 includes a positive electrode tab 23 and a negative electrode tab 24 extending in opposite directions. The positive electrode tab 23 extends from an end of the electrode body 20 on a first side (right side in this example) toward the first side, and constitutes a portion of the positive electrode 21. The positive electrode tab 23 is a portion where the positive electrode active material layer is not formed and the positive electrode current collector is exposed. The positive electrode tab 23 is composed of stacked layers of positive electrode current collectors projecting on the first side. The positive electrode tab 23 is connected to the positive electrode current collector 32, and connected to the positive electrode terminal 30 through the positive electrode current collector 32. The negative electrode tab 24 extends from an end of the electrode body 20 on a second side (left side in this example) toward the second side, and constitutes a portion of the negative electrode 22. The negative electrode tab 24 is a portion where the negative electrode active material layer is not formed and the negative electrode current collector is exposed. The negative electrode tab 24 is composed of stacked layers of negative electrode current collectors projecting on the second side. The negative electrode tab 24 is connected to the negative electrode current collector 42, and connected to the negative electrode terminal 40 through the negative electrode current collector 42.

The electrolyte is housed inside the battery case 10 together with the electrode body 20. The electrolyte may be similar to that in a typical secondary battery, and is not particularly limited. The electrolyte is typically a nonaqueous liquid electrolyte (nonaqueous electrolyte) including a nonaqueous solvent and a supporting electrolyte. The nonaqueous solvent includes carbonates such as ethylene carbonate (EC), ethyl methyl carbonate (EMC), and dimethyl carbonate (DMC), for example. As a nonaqueous solvent, EC, EMC, and DMC each in a proportion range from 1% to 99% are preferably mixed such that the total ratio by volume is 100%. The supporting electrolyte is, for example, a fluorine-containing lithium salt. The fluorine-containing lithium salt preferably contains lithium hexafluorophosphate (LiPF6), lithium bis(fluorosulfonyl)imide (F2LiNO4S2) called LiFSI, or a mixture of these. The concentration of the supporting electrolyte is preferably 0.6 mol to 1.8 mol per 1 L of a nonaqueous solvent.

In this preferred embodiment, as illustrated in FIG. 3, the electrode body 20 includes the insulating film 50. The insulating film 50 is housed inside the battery case 10 together with the electrode body 20. The insulating film 50 is located between the battery case 10 and the electrode body 20. As illustrated in FIG. 4, the insulating film 50 covers the perimeter of the electrode body 20. Specifically, the insulating film 50 preferably covers at least the curved portion facing one of the narrow width surfaces 12a of the electrode body 20 and the pair of flat surfaces. The insulating film 50 is made of a single sheet-shaped member assembled in a box shape or a bag shape, for example.

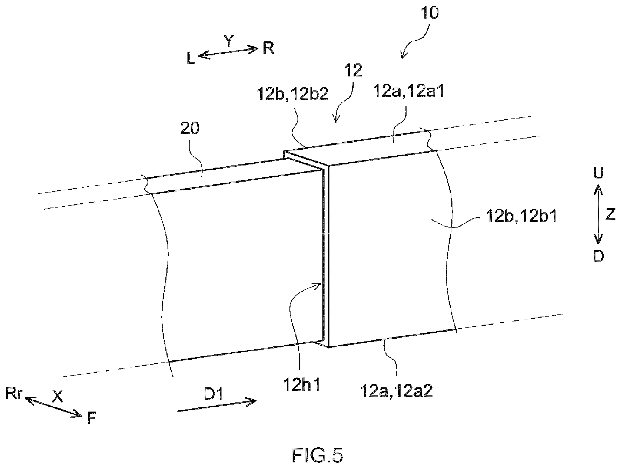

The configuration of the battery 100 according to this preferred embodiment has been partially described above. FIG. 5 is a perspective view illustrating a state where the electrode body 20 is inserted into the case body 12. In fabricating the battery 100, as illustrated in FIG. 5, the electrode body 20 is inserted into the battery case 10 in an insertion direction D1 to be thereby housed in the battery case 10. For example, in the battery case 10, before the first lid 14a and the second lid 14b are assembled to the case body 12, the electrode body 20 is inserted into the case body 12 through either the opening 12h1 or the opening 12h2. In one example in FIG. 5, the electrode body 20 is inserted into the case body 12 through the opening 12h1. At this time, it is difficult to insert the electrode body 20 into the case body 12 in some cases. In particular, as illustrated in FIG. 4, when the electrode body 20 is inserted into the case body 12 while being covered with the insulating film 50, the insulating film 50 comes into direct contact with the case body 12. The insulating film 50 is relatively thin, and thus, when the insulating film 50 is inserted into the case body 12 while being in contact with the case body 12, defects such as bending might occur. In the following description, it is assumed that contact of the electrode body 20 with the case body 12 includes a state where the insulating film 50 is in contact with the case body 12.

In this preferred embodiment, to ease insertion of the electrode body 20 into the case body 12 in fabricating the battery 100, the contact area between the electrode body 20 and the case body 12 during insertion is reduced. Accordingly, it is possible to reduce a dynamic friction force when inserting the electrode body 20 into the case body 12. This eases insertion of the electrode body 20 into the case body 12, thereby enhancing productivity of the battery 100.

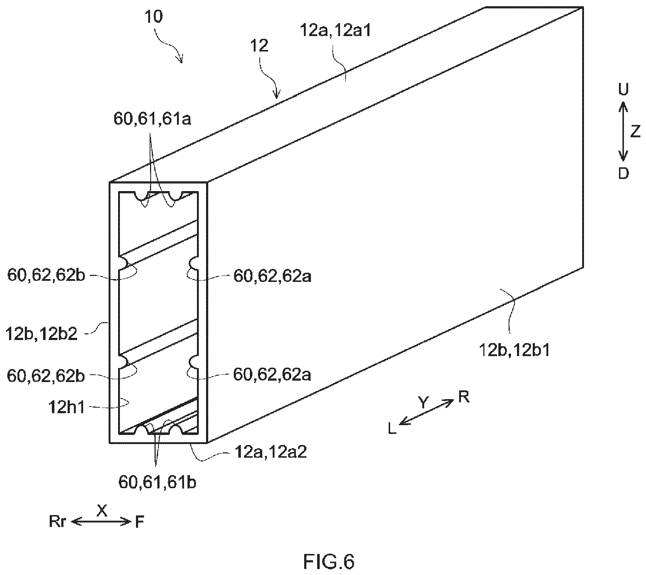

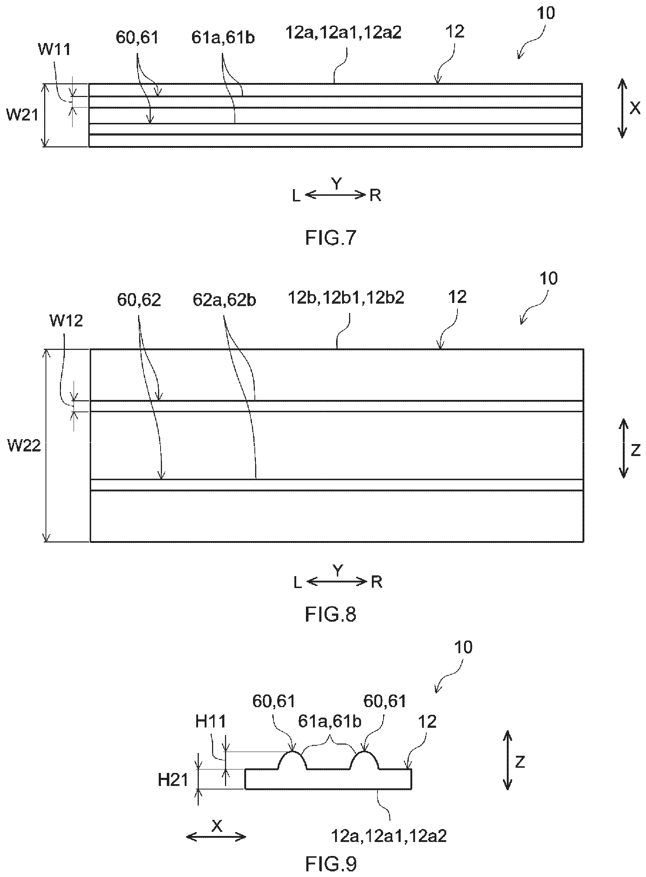

Next, the configuration of the case body 12 will be described in detail as a configuration for improving productivity of the battery 100. FIG. 6 is a perspective view of the case body 12. FIG. 7 is a view illustrating the narrow width surface 12a. FIG. 8 is a view illustrating the wide width surface 12b. In this preferred embodiment, as illustrated in FIG. 6, the case body 12 includes a plurality of projections 60. In FIG. 5, the projections 60 are not shown. As illustrated in FIGS. 7 and 8, the projections 60 extend along the Y direction. The projections 60 are formed on the inner sides of at least one of the pair of narrow width surfaces 12a or the pair of wide width surfaces 12b. In the following description of the projections 60 formed on the inner sides of the surfaces, the term "inner sides" will be omitted as appropriate.

As illustrated in FIG. 6, for example, the plurality of projections 60 are formed on at least one of the pair of narrow width surfaces 12a. In this preferred embodiment, the plurality of projections 60 are located on each of the pair of narrow width surfaces 12a. Furthermore, for example, the plurality of projections 60 are formed on at least one of the pair of the wide width surfaces 12b. In this preferred embodiment, the plurality of projections 60 are located on each of the wide width surfaces 12b.

In the following explanation, the projections 60 formed on the narrow width surfaces 12a will be referred to as narrow projections 61. In the narrow projections 61, narrow projections 61 formed on the first narrow width surface 12a1 will be referred to as first narrow projections 61a, and narrow projection 61 formed on the second narrow width surface 12a2 will be referred to as second narrow projections 61b. The projections 60 formed on the wide width surfaces 12b will be referred to as wide projections 62. In the wide projections 62, wide projections 62 formed on the first wide width surface 12b1 will be referred to as first wide projections 62a, and wide projections 62 formed on the second wide width surface 12b2 will be referred to as second wide projections 62b. In this preferred embodiment, in common explanation of the first narrow projections 61a and the second narrow projections 61b, the term of the narrow projections 61 will be used as appropriate. In common explanation of the first wide projections 62a and the second wide projections 62b, the term of the wide projections 62 will be used as appropriate. In addition, in common explanation of the narrow projections 61 and the wide projections 62, the term of the projections 60 will be used as appropriate.

In this preferred embodiment, as illustrated in FIG. 6, the plurality of projections 60 are located on each of the pair of narrow width surfaces 12a and the pair of wide width surfaces 12b. Specifically, two first narrow projections 61a are formed on the first narrow width surface 12a1, and two second narrow projections 61b are formed on the second narrow width surface 12a2. Furthermore, two first wide projections 62a are formed on the first wide width surface 12b1, and two second wide projections 62b are formed on the second wide width surface 12b2. It should be noted that in this preferred embodiment, each of the number of the first narrow projections 61a, the number of the second narrow projections 61b, the number of the first wide projections 62a, and the number of the second wide projections 62b is not limited to two, and may be three or more. The number of the first narrow projections 61a, the number of the second narrow projections 61b, the number of the first wide projections 62a, and the number of the second wide projections 62b may be the same or may be different.

In this preferred embodiment, as illustrated in FIGS. 7 and 8, the first narrow projections 61a, the second narrow projections 61b, the first wide projections 62a, and the second wide projections 62b have the same shape and size, but may have different shapes and sizes. In this preferred embodiment, the projections 60 are linear and each extend in the Y direction. Each projection 60 extends linearly. At least a portion of each projection 60 may be curved. In this preferred embodiment, each projection 60 extends from one end (left end in this example) of the case body 12 in the Y direction to the other end (right end in this example) of the case body 12 in the Y direction. For example, as illustrated in FIG. 7, each narrow projection 61 extends from one end to the other end of the narrow width surface 12a in the Y direction. As illustrated in FIG. 8, each projection 62 extends from one end to the other end of the wide width surface 12b in the Y direction. In this preferred embodiment, the length of each projection 60 in the Y direction is equal to the length of the case body 12 in the Y direction.

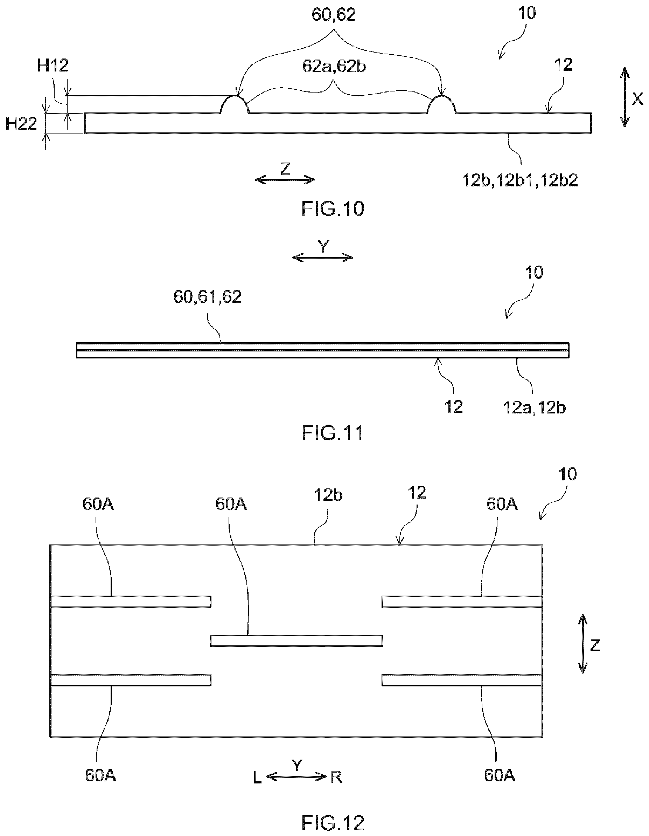

FIG. 9 is a view of the narrow width surface 12a in FIG. 7 as seen from the left. FIG. 10 is a view of the wide width surface 12b of FIG. 8 as seen from the left. As illustrated in FIGS. 9 and 10, the vertical cross-sectional shape of each projection 60 is semicircular. The projection 60 is formed by a curved surface that projects inward from the case body 12. The vertical cross-sectional shape of each projection 60 is not particularly limited, and may be rectangular, for example.

In this preferred embodiment, as illustrated in FIGS. 7 and 8, each projection 60 has a uniform width. The projection 60 has a uniform width at any position in the Y direction. The width of the projection 60 herein refers to the length of the projection 60 in a direction orthogonal to the Y direction, that is, the length of the projection 60 in the lateral direction. For example, as illustrated in FIG. 7, a width W11 of the narrow projection 61 refers to the length in the X direction. As illustrated in FIG. 8, a width W12 of the wide projection 62 refers to the length in the Z direction. In this preferred embodiment, as illustrated in FIG. 7, the width W11 of one narrow projection 61 is less than 1/2 of a length W21 of the narrow width surface 12a in the X direction, preferably 1/3 or less, particularly preferably 1/4 or less. As illustrated in FIG. 8, the width W12 of one wide projection 62 is less than 1/2 of a length W22 of the wide width surface 12b in the Z direction, preferably 1/5 or less, especially preferably 1/10 or less. Furthermore, the total surface area of the plurality of narrow projections 61 formed on one narrow width surface 12a is less than half the area of one narrow width surface 12a, preferably 1/3 or less, especially preferably 1/4 or less. The total surface area of the plurality of wide projections 62 formed on one wide width surface 12b is less than 1/2 of the area of one wide width surface 12b, preferably 1/5 or less, especially preferably 1/10 or less.

FIG. 11 is a view illustrating a height of the projection 60 extending in the Y direction. In this preferred embodiment, as illustrated in FIG. 11, the height is uniform in one projection 60. The projection 60 has a uniform height at any position in the Y direction. The height of projection 60 herein refers to the length of the projection 60 at the highest position. The height of the projection 60 herein can also be expressed as the thickness of the projection 60. For example, as illustrated in FIG. 9, a height H11 of the narrow projection 61 is 0.5 times or more of a thickness H21 of the narrow width surface 12a, preferably 0.8 times or more, particularly preferably 1 time or more. Similarly, as illustrated in FIG. 10, a height H12 of the wide projection 62 is 0.5 times or more of a thickness H22 of the wide width surface 12b, preferably 0.8 times or more, particularly preferably 1 time or more.

In this preferred embodiment, as illustrated in FIGS. 7 and 8, at least one projection 60 is located on a cross section of the case body 12 along the circumferential direction at any position in the Y direction on the case body 12. In other words, at least one projection 60 is formed at any position in the Y direction on the case body 12. Therefore, in inserting the electrode body 40 into the case body 12, the electrode body 40 always comes into contact with at least one of the plurality of projections 60.

The projections 60 are made of a material identical to a material for the case body 12. In this preferred embodiment, the case body 12 is made of a metal such as aluminum, an aluminum alloy, iron, or an iron alloy. Thus, the projections 60 are also made of a metal, similarly to the case body 12. In this preferred embodiment, the projections 60 are fixed to the case body 12 and integrally formed with the case body 12. The expression "the projections 60 are fixed to the case body 12" herein refers to a state where the projections 60 cannot be separated from the case body 12 unless a tool or the like is used. While the projections 60 are fixed to the case body 12, an operator cannot detach the projections 60 from the case body 12 by hand alone. As described in detail later, at least one of the plurality of projections 60 may be formed by welding traces, that is, beads during welding, generated in fabricating the case body 12.

Next, an example of a method for fabricating the battery 100 will be described. In this preferred embodiment, first, a single metal plate is prepared, and a case body 12 is fabricated using the metal plate. Narrow projections 61 are formed on a portion of the metal plate corresponding to narrow width surfaces 12a, and wide projections 62 are formed on a portion of the metal plate corresponding to wide width surfaces 12b, thereby forming projections 60 on the metal plate. The method for forming the projections 60 is not particularly limited, and the projections 60 may be formed by drawing and molding a metal plate or by extrusion molding of a metal plate. In addition, the projections 60 may be formed by plastic processing such as rolling. Next, a gas release valve 13 is formed at a predetermined position of the metal plate by a known method. Then, the metal plate with the projections 60 and the gas release valve 13 is bent and shaped into a cylindrical shape, and seams are joined (e.g., by welding). Beads formed when welding the joint portions at this time may be one of the plurality of projections 60. The projections 60 constituted by beads may be formed by shaving the beads to align the height. In this manner, a case body 12 as illustrated in FIG. 6 can be fabricated.

Thereafter, an electrode body 20 produced by a known method is prepared. Then, as illustrated in FIG. 3, a positive electrode current collector 32 and a negative electrode current collector 42 are respectively joined to a positive electrode tab 23 and a negative electrode tab 24. A negative electrode terminal 40 included in a first lid 14a and the negative electrode current collector 42 are joined together and united. Subsequently, the resulting unit is inserted into the case body 12 fabricated as described above. Then, the positive electrode tab 23 is joined to a positive electrode terminal 30 included in a second lid 14b. The case body 12 is joined to the first lid 14a and the second lid 14b. Finally, an electrolyte is injected through an injection hole, thereby fabricating a battery 100.

In this preferred embodiment, as illustrated in FIG. 3, the battery 100 includes: the rectangular cylindrical case body 12 having openings at both ends in the Y direction; the electrode body 20 housed in the case body 12; the first lid 14a attached to the opening 12h1 at one end (left end in this example) of the case body 12 in the Y direction; and the second lid 14b attached to the opening 12h2 at the other end (right end in this example) of the case body 12 in the Y direction. As illustrated in FIG. 6, the case body 12 has the pair of opposed wide width surfaces 12b and the pair of opposed narrow width surfaces 12a continuous with the wide width surfaces 12b. The plurality of projections 60 along the Y direction of the case body 12 are located on an inner side of at least a surface of the narrow width surfaces 12a and the wide width surfaces 12b of the case body 12. Accordingly, as illustrated in FIG. 5, in inserting the electrode body 20 into the case body 12, the electrode body 20 comes into contact with the projections 60 and is not in contact with the inner surface of the case body 12 except for the projections 60. Thus, in inserting the electrode body 20 into the case body 12, the contact area between the inner surface of the case body 12 and the electrode body 20 can be reduced. This can reduce resistance between the electrode body 20 and the case body 12 in the insertion direction. As a result, the electrode body 20 can be easily inserted into the case body 12, and thus, productivity of the battery 100 can be favorably improved.

In this preferred embodiment, as illustrated in FIG. 6, the plurality of projections 60 (narrow projections 61 in this example) are formed on at least one of the pair of narrow width surfaces 12a. In this preferred embodiment, the plurality of projections 60 are located on each of the pair of narrow width surfaces 12a. For example, in inserting the electrode body 20 into the case body 12 in the orientation of the case body 12 as illustrated in FIG. 5, the dead weight of the electrode body 20 tends to be applied to the narrow width surfaces 12a. Even in this case, since the plurality of projections 60 are formed on the narrow width surfaces 12a, it is possible to reduce resistance between the electrode body 20 and the case body 12 (specifically the narrow width surfaces 12a) during insertion of the electrode body 20. Accordingly, the electrode body 20 can be easily inserted into the case body 12.

In this preferred embodiment, as illustrated in FIG. 6, the plurality of projections 60 (wide projections 62 in this example) are formed on at least one of the pair of wide width surfaces 12b. In this preferred embodiment, the plurality of projections 60 are located on each of the pair of wide width surfaces 12b. Accordingly, in inserting the electrode body 20 into the case body 12, resistance between the wide width surfaces 12b, which are wider surfaces, and the electrode body 20 can be reduced. As a result, the electrode body 20 can be easily inserted into the case body 12.

In this preferred embodiment, as illustrated in FIG. 7 and FIG. 8, the projections 60 are located on a cross section of the case body 12 along the circumferential direction at any position in the Y direction on the case body 12. Accordingly, the electrode body 20 can maintain contact with at least one of the plurality of projections 60 while being inserted into the case body 12. Thus, it is possible to reduce the contact area between the inner surface of the case body 12 and the electrode body 20 while inserting the electrode body 20 into the case body 12. As a result, the electrode body 20 can be easily inserted into the case body 12.

In this preferred embodiment, the projections 60 are made of a material identical to a material for the case body 12. Accordingly, it is possible to form the projections 60 from the case body 12. Consequently, it is unnecessary to form the projections 60 from a material other than the material for the case body 12, and thus, the projections 60 can be formed in the process of fabricating the case body 12.

The foregoing description has been directed to the configuration of the battery 100. The number, position, shape, and other features of the projections 60 are not limited to the configuration of the above embodiment. Next, variations of the projections 60 will be described. The following description is directed to variations of the projections 60 formed on the wide width surfaces 12b (wide projections 62 in this example), but the same applies to variations of the projections 60 formed on the narrow width surfaces 12a (narrow projections 61 in this example). In the following description, by appropriately substituting the wide width surfaces 12b with the narrow width surfaces 12a, it is possible to obtain variations of the narrow projections 61.

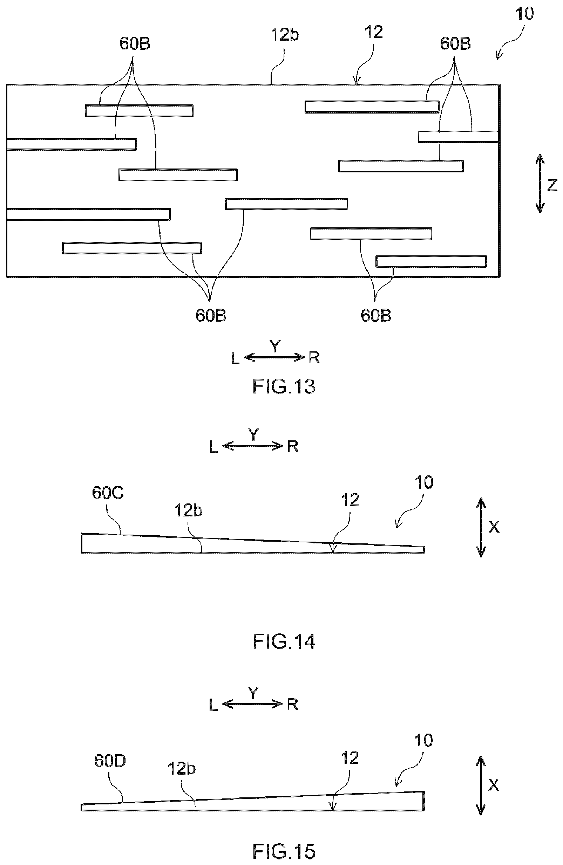

FIGS. 12 and 13 are views illustrating wide width surfaces 12b according to variations. As illustrated in FIG. 12, one projection 60A may not extend to both ends of the case body 12 in the Y direction. In other words, the length of the projection 60A in the Y direction may be shorter than the length of the case body 12 in the Y direction. In the example illustrated in FIG. 12, the length of each of the plurality of projections 60A in the Y direction formed on the wide width surface 12b may be the same, but may be different. In addition, the plurality of projections 60A may be arranged in a staggered pattern on the wide width surface 12b. For example, the plurality of projections 60A arranged in the Y direction may be shifted in the width direction (the Z direction in this example) of the wide width surface 12b. Furthermore, the plurality of projections 60A may be arranged in the width direction of the wide width surface 12b at the same position in the Y direction on the wide width surface 12b. Even in the example illustrated in FIG. 12, at least one projection 60 may be located at any position in the Y direction on the wide width surface 12b.

As illustrated in FIG. 13, a plurality of projections 60B may be randomly arranged on the wide width surface 12b. That is, in the plurality of projections 60B formed on the wide width surface 12b, uniformity is not necessary for the position in the Y direction and the position in the width direction position on the wide width surface 12b. In this case, the lengths of the plurality of projections 60B in the Y direction may be partially different, completely different, or all the same. In the plurality of projections 60B formed on the wide width surface 12b, the position of one end in the Y direction may be different, and the position of the other end in the Y direction may be different.

As illustrated in FIGS. 12 and 13, even in a case where the plurality of projections 60A and 60B are arranged in a staggered or random pattern, it is possible to reduce the contact area between the inner surface of the case body 12 and the electrode body 20 in inserting the electrode body 20 into the case body 12. Thus, resistance between the electrode body 20 and the case body 12 in the insertion direction D1 (see FIG. 5) can be reduced. As a result, the electrode body 20 can be easily inserted into the case body 12, and thus, productivity of the battery 100 can be favorably improved.

FIGS. 14 through 17 are views illustrating heights of projections 60C through 60F according to variations. For example, as illustrated in FIG. 14, a projection 60C may be configured to decrease in height from one end (left end in this example) to the other end (right end in example) in the Y direction. As illustrated in FIG. 15, a projection 60D may be configured to increase in height from one end to the other end in the Y direction.

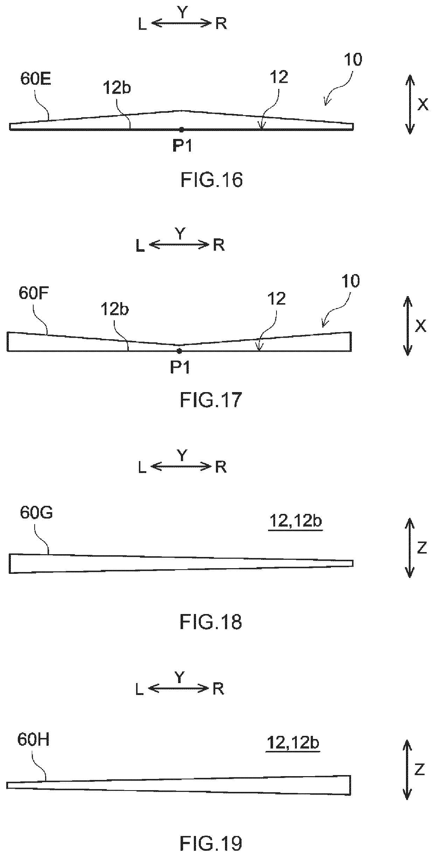

In FIGS. 16 and 17, a point P represents a reference point. The reference point P1 is located between one end and the other end of the wide width surface 12b in the Y direction. The reference point P1 herein is a center point of the wide width surface 12b in the Y direction. Alternatively, the reference point P1 may be a point shifted in the Y direction from the center point of the wide width surface 12b in the Y direction. As illustrated in FIG. 16, a projection 60E may increase in height from one end (left end in this example) in the Y direction toward the reference point P1. In this case, the height of the projection 60E may decrease from the reference point P1 toward the other end (right end in this example) in the Y direction. In other words, the projection 60E may be configured to have the highest height at the position of the reference point P1.

As illustrated in FIG. 17, a projection 60F may decrease in height from one end in the Y direction toward the reference point P1. In this case, the projection 60F may increase in height from the reference point P1 toward the other end in the Y direction. In other words, the projection 60F may be configured to have the lowest height at the position of the reference point P1.

FIGS. 18 through 21 are views illustrating widths of projections 60G through 60J according to variations, and illustrate the wide width surface 12b. As illustrated in FIG. 18, the projection 60G may be configured to decrease in width (length in the Z direction in this example) from one end to the other end in the Y direction. As illustrated in FIG. 19, the projection 60H may be configured to increase in width from one end to the other end in the Y direction.

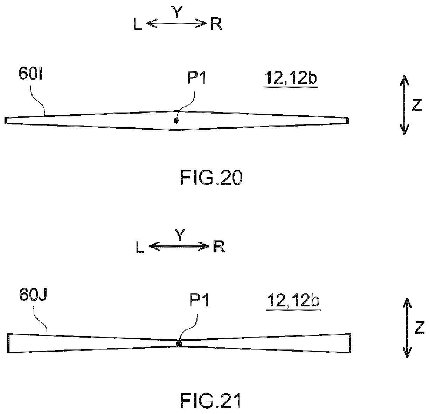

As illustrated in FIG. 20, the projection 60I may increase in width from one end (left end in this example) in the Y direction toward the reference point P1. In this case, the width of the projection 60I may decrease from the reference point P1 toward the other end (right end in this example) in the Y direction. In other words, the projection 60I may be configured to have the widest width at the position of the reference point P1.

As illustrated in FIG. 21, the projection 60J may decrease in width from one end in the Y direction toward the reference point P1. In this case, the width of the projection 60J may increase from the reference point P1 toward the other end in the Y direction. In other words, the projection 60J may be configured to have the smallest width at the position of the reference point P1.

Although not shown, the projection 60 may be configured to vary in height from one end to the other end in the Y direction. In other words, the projection 60 may be configured to have a height varying from one end to the other end in the Y direction. In other words, the height of the projection 60 may be high in one portion and low in another portion in the Y direction. Although not shown, the projection 60 may be configured to vary in width from one end to the other end in the Y direction. In other words, the projection 60 may be configured to have a width varying from one end to the other end in the Y direction. For example, the width of the projections 60 may be large in one portion and small in another portion in the Y direction. In addition, the former portion where the width is large and the latter portion where the width is small described above may be alternately arranged in the Y direction.

The battery 100 can be used for various applications, and suitably used as a power source (drive power source) for a motor mounted on a vehicle such as an automobile or a truck. Although not particularly limited, examples of the type of the vehicle include a plug-in hybrid electric vehicle (PHEV), a hybrid electric vehicle (HEV), and a battery electric vehicle (BEV).

Various examples of the present disclosure have been described. Unless otherwise specified, the preferred embodiment and other examples mentioned herein do not limit the present disclosure. The preferred embodiment of the invention disclosed here can be modified in various ways, and the constituent elements and the processes described here can be appropriately omitted or appropriately combined unless no particular problems arise.

As described above, the specification includes the disclosures described in the following items.

Item 1: A power storage device includes: a rectangular cylindrical case body having openings at both ends in a length direction of the case body; an electrode body housed in the case body; a first lid attached to the opening at one end of the case body in the length direction; and a second lid attached to the opening at another end of the case body in the length direction, the case body includes a pair of opposed wide width surfaces, and a pair of opposed narrow width surfaces continuous with the pair of wide width surfaces, and a plurality of projections along the length direction of the case body are located on an inner side of at least a surface of the narrow width surfaces and the wide width surfaces of the case body.

Item 2: The power storage device of item 1 in which the plurality of projections are located on at least one of the pair of narrow width surfaces.

Item 3: The power storage device of item 2 in which the plurality of projections are located on each of the pair of narrow width surfaces.

Item 4: The power storage device of any one of items 1 to 3 in which the plurality of projections are located on at least one of the pair of wide width surfaces.

Item 5:
The power storage device of item 4 in which the plurality of projections are located on each of the pair of wide width surfaces.

Item 6: The power storage device of any one of items 1 to 5 in which the plurality of projections are arranged in a staggered or random pattern.

Item 7: The power storage device of any one of items 1 to 6 in which the projections are located on a cross section of the case body along a circumferential direction of the case body at any position in the length direction of the case body.

Item 8: The power storage device of any one of items 1 to 7 in which the projections are made of a material identical to a material for the case body.

## Claims

1. A power storage device (100) comprising:
a rectangular cylindrical case body (12) having openings (12h1, 12h2) at both ends in a length direction (Y) of the case body (12);
an electrode body (20) housed in the case body (12);
a first lid (14a) attached to the opening (12h1) at one end of the case body (12) in the length direction (Y); and
a second lid (14b) attached to the opening (12h2) at another end of the case body (12) in the length direction (Y), wherein
the case body (12) includes
a pair of opposed wide width surfaces (12b), and
a pair of opposed narrow width surfaces (12a) continuous with the pair of wide width surfaces (12b), and
a plurality of projections (60) along the length direction (Y) of the case body (12) are located on an inner side of at least a surface of the narrow width surfaces (12a) and the wide width surfaces (12b) of the case body (12).

2. The power storage device (100) according to claim 1, wherein the plurality of projections (60) are located on at least one of the pair of narrow width surfaces (12a).

3. The power storage device (100) according to claim 2, wherein the plurality of projections (60) are located on each of the pair of narrow width surfaces (12a).

4. The power storage device (100) according to any one of claims 1 to 3, wherein the plurality of projections (60) are located on at least one of the pair of wide width surfaces (12b).

5. The power storage device (100) according to claim 4, wherein the plurality of projections (60) are located on each of the pair of wide width surfaces (12b).

6. The power storage device (100) according to any one of claims 1 to 5, wherein the plurality of projections (60) are arranged in a staggered or random pattern.

7. The power storage device (100) according to any one of claims 1 to 6, wherein the projections (60) are located on a cross section of the case body (12) along a circumferential direction of the case body (12) at any position in the length direction (Y) of the case body (12).

8. The power storage device (100) according to any one of claims 1 to 7, wherein the projections (60) are made of a material identical to a material for the case body (12).
